# EUROPÄISCHE PATENTANMELDUNG

(11) **EP 1 060 799 A2**
(43) Veröffentlichungstag der Anmeldung: **20.12.2000**
(21) Anmeldenummer: 00112119.3
(22) Anmeldetag: 06.06.2000
(51) Int. Cl.: B07C 5/36, B65G 53/56

(54) **Vorrichtung zum Ausscheiden von Metallteilen**

(30) Priorität: 16.06.1999 DE 19927368
(71) Anmelder: Pulsotronic Merten GmbH & Co. KG, 51674 Wiehl-Bomig (DE)
(72) Erfinder: Vicktorius, Richard, Dipl.-Ing., 50739 Köln (DE); Hain, Volker, 57587 Katzwinkel (DE)
(74) Vertreter: Selting, Günther, Dipl.-Ing.

(57) **Zusammenfassung**

Die Vorrichtung zum Ausscheiden von Metallteilen aus einem Fördergutstrom weist eine Weiche (11) in Form einer Drehrohrweiche auf. Die Drehrohrweiche enthält ein Drehorgan (36) nach Art eines Kükens mit zwei Einlaßkanälen (37,38), die selektiv mit einer Einlaßöffnung (32) zur Deckung gebracht werden können, und einem Auslaßkanal (39). Der Auslaßkanal (39) führt normalerweise zu einem Gut-Auslaß (34), wird aber beim Verschwenken des Drehorgans (36) auf den Ausscheide-Auslaß (15) gelenkt. Ein Metalldetektor (28), der auf das Vorhandensein von Metallteilen im Förderkanal (30) reagiert, steuert das Drehorgan (36), das zum Ausscheiden des Metallteils um weniger als 90° gedreht wird.

## Beschreibung

Die Erfindung betrifft eine Vorrichtung zum Ausscheiden von Metallteilen aus einem Fördergutstrom, mit einem Metalldetektor und einer von dem Metalldetektor gesteuerten Weiche, die einen Einlaß und zwei selektiv ansteuerbare Auslässe aufweist.

Aus EP 0 555 821 A2 ist eine Vorrichtung zum Ausscheiden von Metallteilen aus einem Fördergutstrom bekannt, bei der die Weiche aus einer Klappe besteht, die durch einen Elektromagneten um eine Querachse herum schwenkbar ist. In der einen Endstellung leitet die Klappe den Fördergutstrom zu einer ersten Auslaßöffnung, die als Gut-Öffnung bezeichnet werden kann. In der entgegengesetzten Endposition der Klappe wird der Fördergutstrom zu einer zweiten Auslaßöffnung befördert, die als Ausscheidungs-Öffnung bezeichnet werden kann. In Abhängigkeit von den Signalen eines Metalldetektors wird die Weiche derart gesteuert, daß ein Fördergutstrom, der keine Metallteile enthält, der Gut-Öffnung zugeführt wird, während die Klappe umgesteuert wird, sobald ein Metallteil erkannt wird. Dadurch wird das Metallteil und ein Teil des Fördergutstromes der Ausscheidungs-Öffnung zugeführt. Bei Förderstillstand oder bei geringer Geschwindigkeit des Fördergutstromes kann es vorkommen, daß die Klappe durch das Gewicht des Fördergutes blockiert wird. Wenn der Fördergutstrom mit Hilfe strömender Luft bewegt wird, spielen auch Dichtigkeitsprobleme eine große Rolle. Es ist dann schwierig, zu gewährleisten, daß die Weiche bei jeder Klappenstellung dicht bleibt, so daß keine Außenluft eingesaugt wird bzw. keine Druckluft aus der Förderstrecke austritt. Zur Bewältigung des Dichtheitsproblems sind aufwendige Dichtungsmaßnahmen erforderlich.

Eine aus DE 39 31 579 C1 bekannte Vorrichtung zum Abscheiden von Metallteilen weist eine Weiche mit einem horizontal bewegbaren trichterförmigen Schieber auf, der an seiner Oberseite offen ist. Hierbei ist eine Abdichtung der Förderstrecke über die Weiche hinweg nicht vorgesehen.

Bei Rohrförderern sind generell Weichen bekannt, die den Fördergutstrom von einem Einlaß selektiv zu einem von mehreren Auslässen leiten. Eine solche Drehrohrweiche nach DE 41 14 949 C1 weist in einem Gehäuse, das mit einer Einlaßöffnung und zwei Auslaßöffnungen versehen ist, ein Drehorgan auf, das einkanalig oder zweikanalig ausgebildet ist. Bei einem einkanaligen Drehorgan wird durch Drehen des Drehorgans dessen Kanal mit dem einen oder dem anderen Auslaß verbunden, während er mit dem einzigen vorhandenen Einlaß stets verbunden bleibt. Bei einem zweikanaligen Drehorgan sind die beiden Kanäle vollständig voneinander getrennt, so daß sie nur sehr kleine Durchlaßquerschnitte haben können. In jedem Fall wäre eine derartige Drehrohrweiche für Metallabscheider nicht gut geeignet, weil eine Drehung des Drehorgans um 180° erforderlich ist. Gewünscht wird eine relativ geringe Drehung, die eine kurze Ansprechzeit ermöglicht. Bei einer Einkanalrohrweiche ist eine Drehung des Drehorgans um wenigstens 90° erforderlich und bei einer Zweikanalrohrweiche darf ein erkanntes Metallteil nicht in den Durchlaufkanal für den metallfreien Gutstrom gelangen, da sonst keine Ausscheidung möglich ist.

Der Erfindung liegt die Aufgabe zugrunde, eine Vorrichtung zum Ausscheiden von Metallteilen zu schaffen, die mit kleinen Abmessungen realisiert werden kann und eine kurze Umschaltdauer hat.

Die Lösung dieser Aufgabe erfolgt erfindungsgemäß mit den im Patentanspruch 1 angegebenen Merkmalen.

Bei der erfindungsgemäßen Vorrichtung ist die Vorrichtung als Drehrohrweiche mit einem rohrförmigen Gehäuse ausgebildet. An dem Umfang des Gehäuses sind eine Einlaßöffnung und zwei Auslaßöffnungen angeordnet. Das Gehäuse enthält ein Drehorgan, welches die Einlaßöffnung wahlweise mit einer der beiden Auslaßöffnungen verbindet. Das Drehorgan weist zwei spitzwinklig zueinander verlaufende benachbarte Einlaßkanäle und einen mit beiden Einlaßkanälen verbundenen Auslaßkanal auf. Durch Drehen des Drehorgans um weniger als 90° kann zwischen Durchlaß und Ausscheiden umgeschaltet werden. Vorzugsweise ist der Umschaltwinkel kleiner als 90° und er beträgt 30 bis 60°. Damit kann das Drehorgan einen relativ kleinen Durchmesser haben und relativ breite Kanäle enthalten. Das Kanalvolumen des Drehorgangs ist gering, so daß außer den auszuscheidenden Metallteilen wenig Gutmaterial abgeschieden wird. Außerdem werden kurze Ansprechzeiten ermöglicht.

Die Vorrichtung eignet sich dazu, unmittelbar auf der Zuführöffnung einer Verarbeitungsmaschine montiert zu werden, weil sie geringe Abmessungen und eine kurze Ansprechdauer hat. Die Vorrichtung erfordert wenig Platz und hat eine extrem kurze Einbaulänge.

Gemäß einer bevorzugten Ausführungsform der Erfindung gehen die Einlaßkanäle ohne Trennwand ineinander über. Dies bedeutet, daß die Einlaßkanäle ständig mit der Einlaßöffnung des Gehäuses in Deckung sind, so daß die Einlaßöffnung beim Betrieb der Vorrichtung niemals verschlossen oder auch nur verkleinert wird. Es besteht natürlich die Möglichkeit, das Drehorgan in eine solche Drehstellung zu bringen, daß auch die Einlaßöffnung verschlossen wird, beispielsweise wenn die Fördervorrichtung stillgesetzt wird.

Vorzugsweise liegen die Einlaßöffnung und eine Auslaßöffnung einander diametral gegenüber und die zweite Auslaßöffnung ist gegenüber der ersten um weniger als 60° versetzt. In diesem Fall passiert der Fördergutstrom im Normalzustand das Drehorgan diametral ohne jegliche Ablenkung. Im Falle des Ansprechens des Metalldetektors wird das Drehorgan um weniger als 60° gedreht, so daß der Fördergutstrom um einen spitzen Winkel, der sogar kleiner ist als 60°, abgelenkt wird.

Die Breite der Einlaßkanäle und des Ausgangskanals beträgt vorzugsweise mindestens das 0,4-fache des Durchmessers des Drehorgans. Dadurch wird das im Drehorgan vorhandene Volumen zu einem großen Prozentsatz für die Gutförderung ausgenutzt.

Im folgenden wird unter Bezugnahme auf die Zeichnungen ein Ausführungsbeispiel der Erfindung näher erläutert.

Es zeigen:

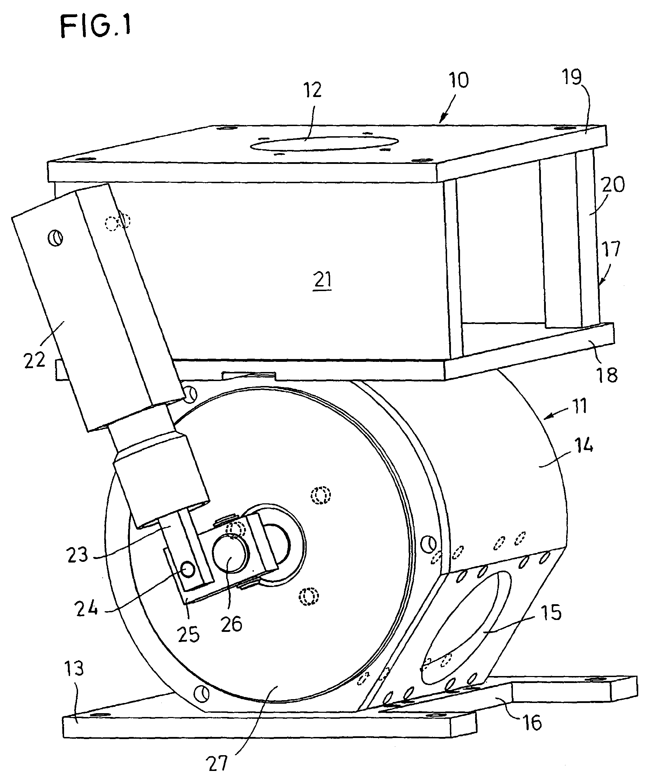

- Fig. 1: eine perspektivische Seitenansicht der Vorrichtung zum Ausscheiden von Metallteilen,
- Fig. 2: einen Querschnitt der Vorrichtung, wobei sich das Drehorgan in der Durchlaßstellung befindet, und
- Fig. 3: einen Querschnitt der Vorrichtung, wobei sich das Drehorgan in der Ausscheide-Stellung befindet.

Die Vorrichtung weist einen Detektorteil 10 und eine Weiche 11 auf. Der Förderkanal 12 erstreckt sich durch den Detektorteil 10 und die Weiche 11 hindurch und er verläuft senkrecht von oben nach unten durch die Vorrichtung. Am unteren Ende der Weiche 11 befindet sich ein Flansch 13, der auf einer Verarbeitungsmaschine montiert werden kann, welcher der Gutstrom zugeführt wird.

Die Weiche 11 hat ein rohrförmiges Gehäuse 14, das mit horizontaler Achse angeordnet ist und dessen Einlaß sich unter dem Detektorteil 10 an der Oberseite und dessen Auslaß sich an dem Flansch 13 an der Unterseite befindet. Ein Ausscheide-Auslaß 15 ist in der unteren Hälfte des Gehäuseumfanges vorgesehen. Damit an den Ausscheide-Auslaß 15 eine (nicht dargestellte) Rohrleitung angesetzt werden kann, ist der Flansch 13 unterhalb des Ausscheide-Auslasses 15 mit einer Aussparung 16 versehen.

Der Detektorteil 10 weist einen Rahmen 17 mit einer unteren Platte 18 und einer oberen Platte 19 auf. Diese Platten 18,19 werden durch Abstandhalter 20 in gegenseitigem Abstand gehalten. An der einen Seite des Rahmens sind die Platten 18,19 durch eine Seitenwand 21 verbunden. An der Seitenwand 21 ist ein Aktuator 22 befestigt, der einen (nicht dargestellten) Elektromagneten enthält oder einen pneumatischen oder hydraulischen Zylinder. Der Aktuator 22 weist einen ausfahrbaren Stößel 23 auf, welcher durch ein Gelenk 24 mit einem Ansatz 25 verbunden ist. Der Ansatz 25 steht von einer Welle 26 ab, welche axial aus einer Stirnwand 27 des rohrförmigen Gehäuses 14 herausragt.

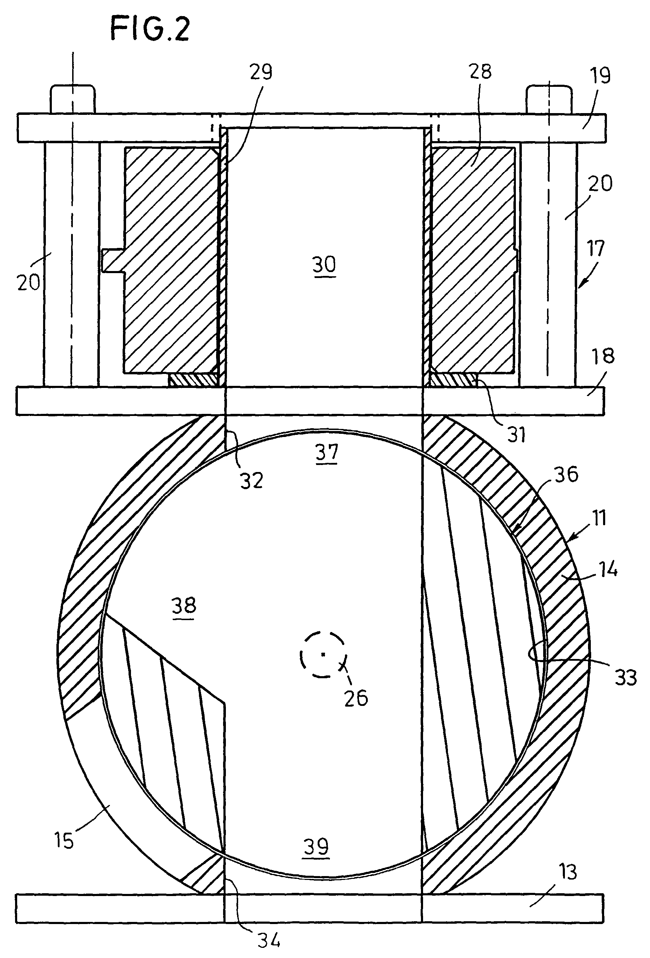

In dem Rahmen 17 ist der Metalldetektor 28 befestigt (Fig. 2). Der Metalldetektor 28 ist ringförmig ausgebildet und er umgibt ein aus Kunststoff bestehendes Rohr 29, das den Zuführkanal 30 bildet. Der Metalldetektor 28 ist mit einem Gummiring 31 auf der Platte 18 gelagert. Die Platte 18 liegt unmittelbar auf dem Gehäuse 14 auf, so daß der Zuführkanal 30 bündig mit der Einlaßöffnung 32 des Gehäuses 14 angeordnet ist. Wie Fig. 2 zeigt, hat das Gehäuse 14 einen zylindrischen Innenraum 33, an dem der Einlaßöffnung 32 diametral gegenüberliegend eine erste Auslaßöffnung 34 vorgesehen ist, die auch durch den Flansch 13 hindurchgeht. In derselben Querschnittsebene ist um einen spitzen Winkel von etwa 40° versetzt zu der ersten Auslaßöffnung 34 eine zweite Auslaßöffnung 15 vorgesehen.

In dem Gehäuse 14 ist das Drehorgan 36 angeordnet, welches mit der Welle 26 verbunden ist. Das Drehorgan ist ein generell zylindrisches Küken, das den Innenraum 33 ausfüllt, wobei (nicht dargestellte) Dichtungen um die Einlaßöffnung 32 und die Auslaßöffnungen 34,15 herum vorgesehen sein können, um das Entweichen von Luft zu verhindern. Das Gehäuse 14 ist insgesamt nach außen abgedichtet, so daß der Innenraum nur mit der Förderleitung verbunden ist.

Das Drehorgan 36 enthält einen radialen ersten Einlaßkanal 37 und einen ebenfalls radialen zweiten Einlaßkanal 38. Die Achsen der Einlaßkanäle 37,38 sind auf die Achse der Welle 26 gerichtet. Ferner ist in gerader Weiterführung des ersten Einlaßkanals 37 ein Auslaßkanal 39 vorgesehen, in den der zweite Einlaßkanal 38 seitlich einmündet. Die Achsen der Einlaßkanäle 37,38 bilden einen Winkel, der vorzugsweise weniger als 60° beträgt.

Bei dem vorliegenden Ausführungsbeispiel sind die Einlaßkanäle 37,38 miteinander verschmolzen, d.h. zwischen diesen Kanälen befindet sich kein Steg und keine Trennwand. Demzufolge ist die gemeinsame Öffnung der Einlaßkanäle 37,38 stets mit dem Einlaß 32 vollflächig verbunden.

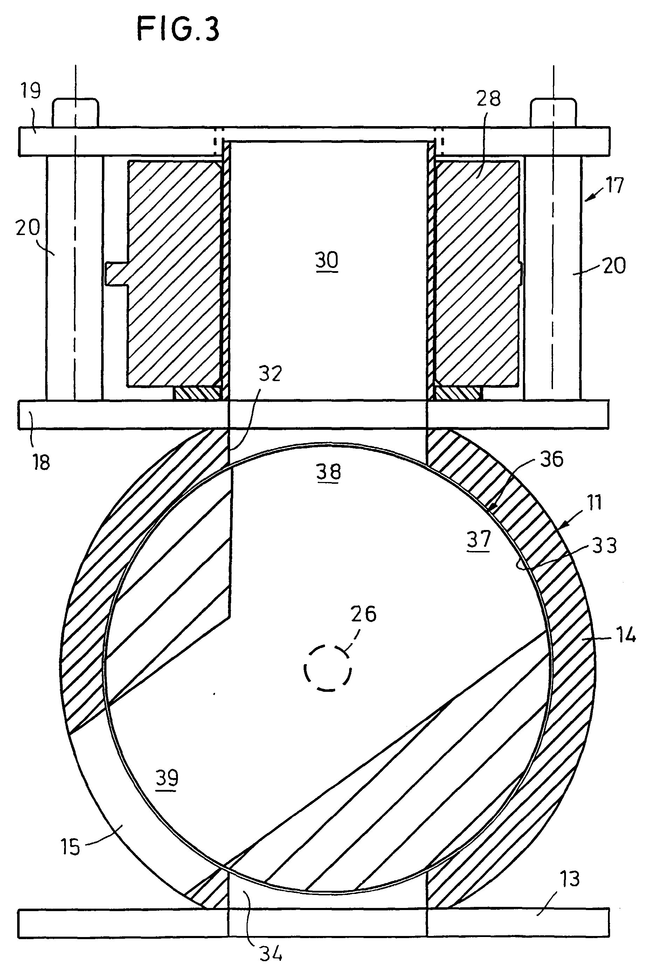

Das Drehorgan 36 wird durch Drehen der Welle 26 von dem Aktuator 22 gedreht. Dabei erfolgt zwischen der in Fig. 2 dargestellten Durchlaßstellung und der in Fig. 3 dargestellten Ausscheidestellung eine Drehung um einen Winkel von weniger als 90°.

Der Metalldetektor 28 ist von bekannter Bauart und wird daher nicht im Detail beschrieben. Wenn in dem Gutstrom, der den Zuführkanal 30 passiert, ein Metallteil berührungslos detektiert wird, spricht der Metalldetektor an. Der Metalldetektor 28 betätigt daraufhin den Aktuator 22, der eine Verstellung des Drehorgans 36 bewirkt. Dadurch gelangt das Drehorgan 36 von der in Fig. 2 dargestellten Durchlaßstellung in die in Fig. 3 dargestellte Ausscheidestellung. In der Ausscheidestellung wird der Gutstrom dem zweiten Einlaßkanal 38 zugeführt und in dem Drehorgan 36 um weniger als 90° umgelenkt.

Ein Vorteil der Vorrichtung besteht darin, daß die Abscheidung von Metallteilen auch bei sehr geringen Durchlaufgeschwindigkeiten und selbst bei Förderstillstand funktioniert. Die Vorrichtung hat extrem kurze Reaktionszeiten und separiert Metallteile, die im Gutstrom entdeckt werden, ohne daß eine größere Menge an Fördergut ausgeschieden wird. Nach der Separierung eines Metallteils wird das Drehorgan 36 automatisch wieder in die Durchlaßstellung gestellt.

Die Vorrichtung eignet sich für alle Arten von Fördergut, die durch Rohrleitungen förderbar sind, insbesondere mit Luftdruck oder Saugwirkung, beispielsweise Granulat öder pulverförmiges Gut. Eine besondere Anwendung besteht in der Beschickung von Kunststoff verarbeitenden Maschinen mit Granulat, wobei die Vorrichtung unmittelbar auf den Einlaß der Verarbeitungsmaschine aufgesetzt werden kann.

## Patentansprüche

1. Vorrichtung zum Ausscheiden von Metallteilen aus einem Fördergutstrom, mit einem Metalldetektor (28) und einer von dem Metalldetektor gesteuerten Weiche (11), die einen Einlaß und zwei selektiv ansteuerbare Auslässe aufweist,
**dadurch gekennzeichnet,**
daß die Weiche (11) als Drehrohrweiche mit einem Gehäuse (14), an dessen Umfang eine Einlaßöffnung (32) und zwei Auslaßöffnungen (34,15) angeordnet sind, und einem darin gelagerten Drehorgan (36) ausgebildet ist, und das Drehorgan (36) zwei benachbarte spitzwinklig zueinander verlaufende Einlaßkanäle (37,38) und einen mit beiden Einlaßkanälen verbundenen Auslaßkanal (39) aufweist.

2. Vorrichtung nach Anspruch 1, dadurch gekennzeichnet, daß die Einlaßkanäle (37,38) ohne Trennwand ineinander übergehen.

3. Vorrichtung nach Anspruch 1 oder 2, dadurch gekennzeichnet, daß die Einlaßöffnung (32) und die eine Auslaßöffnung (34) einander diametral gegenüberliegend und die zweite Auslaßöffnung (15) gegenüber der ersten (34) um weniger als 60° versetzt ist.

4. Vorrichtung nach einem der Ansprüche 1-3, dadurch gekennzeichnet, daß die Breite der Einlaßkanäle (37,38) und des Auslaßkanals (39), im Querschnitt des Drehorgans betrachtet, mindestens das 0,4-fache des Durchmessers des Drehorgans beträgt.

5. Vorrichtung nach einem der Ansprüche 1-4, dadurch gekennzeichnet, daß der Metalldetektor (28) in einem unmittelbar an die Einlaßöffnung (32) anschließenden Rahmen (17) oder Schutzgehäuse angeordnet ist.
